Europäisches Patentamt

European Patent Office

Office européen des brevets

(19)

(11) **EP 1 180 250 B1**

(12) **EUROPÄISCHE PATENTSCHRIFT**

(45) Veröffentlichungstag und Bekanntmachung des Hinweises auf die Patenterteilung:
**27.11.2002   Patentblatt 2002/48**

(51) Int Cl.⁷: $G02F\ 1/35$, H04B 10/12

(21) Anmeldenummer: **00940196.9**

(22) Anmeldetag: **17.05.2000**

(86) Internationale Anmeldenummer:
**PCT/DE00/01564**

(87) Internationale Veröffentlichungsnummer:
**WO 00/073847 (07.12.2000 Gazette 2000/49)**

(54) **VERFAHREN UND ANORDNUNG ZUR ERZEUGUNG VON RZ-SIGNALEN**

METHOD AND SYSTEM FOR GENERATING RETURN-TO-ZERO SIGNALS

PROCEDE ET DISPOSITIF POUR GENERER DES SIGNAUX RZ

(84) Benannte Vertragsstaaten:
**DE FR GB IT**

(30) Priorität: **27.05.1999   DE 19924347**
**30.07.1999   DE 19936075**

(43) Veröffentlichungstag der Anmeldung:
**20.02.2002   Patentblatt 2002/08**

(73) Patentinhaber: **SIEMENS AKTIENGESELLSCHAFT**
**80333 München (DE)**

(72) Erfinder:
• **FÜRST, Cornelius**
**D-81371 München (DE)**
• **GEIGER, Harald**
**D-82061 Neuried (DE)**
• **NOE, Reinhold**
**D-33100 Paderborn (DE)**

(56) Entgegenhaltungen:
WO-A-96/31029        WO-A-99/08406
DE-C- 4 441 180      US-A- 4 505 587
US-A- 5 434 693

• **PATENT ABSTRACTS OF JAPAN vol. 018, no. 066 (E-1501), 3. Februar 1994 (1994-02-03) & JP 05 283804 A (KOKUSAI DENSHIN DENWA CO LTD), 29. Oktober 1993 (1993-10-29) -& JP 05 283804 A 29. Oktober 1993 (1993-10-29)**

**Beschreibung**

Eine Gruppe optischer Übertragungssysteme, die mit hohen Datenraten arbeitet, benötigt Folgen von kurzen Impulsen, die als RZ-Impulse (return to zero) bezeichnet werden. Ein optischer Impuls kann hierbei eine logische 1 repräsentieren, während ein fehlender Impuls einer logischen 0 eines binären Signals entspricht.

Aus dem Patent DE 44 41 180 C1 ist es bekannt, durch Kettenschaltung zweier mit sinusförmigen Spannungen angesteuerter Modulatoren, die mit unterschiedlichen Frequenzen betrieben werden, solche Impulse zu erzeugen. Nachteilig ist es, daß ein Frequenzteiler zur Erzeugung des zweiten Treibersignals erforderlich ist und beide Modulatoren mit hohen Leistungen angesteuert werden müssen.

Dieses Prinzip zur Erzeugung von kurzen Impulsen ist bereits aus dem Patent US 4,505,587 bekannt, bei dem ultrakurze Impulse mit Hilfe einer Vielzahl von Modulatoren erzeugt werden, wobei sich die Frequenzen der Treibersignale jeweils verdoppeln.

Aus Elektronic Letters 5th August 1993, Vol. 29, No. 16, Seiten 1449 bis 1451 ist das Erzeugen von kurzen optischen Impulsen mit Hilfe von phasenverschobenen Spannungen gleicher Frequenz bekannt. Diese Phasenverschiebung muß jedoch exakt eingehalten werden, wenn die spitzen Impulse eine konstante Form aufweisen sollen.

Aufgabe der Erfindung ist es, ein Verfahren und eine Anordnung zum Erzeugen von möglichst konstanten optischen Impulsen anzugeben.

Diese Aufgabe wird durch ein Verfahren nach Anspruch 1 gelöst. Erfinderische Anordnungen sind in dem unabhängigen Anspruch 5 angegeben.

Vorteilhafte Weiterbildungen der Erfindung sind in den abhängigen Ansprüchen beschrieben.

Vorteilhaft ist bei dieser Erfindung, daß das zweite Treibersignal nur eine geringe Treiberspannung und damit eine geringe Leistung benötigt. Für beide Modulatoren kann - von unterschiedlichen Amplituden abgesehen - das gleiche Treibersignal verwendet werden. Die Phasenbeziehung zwischen den beiden Treibersignalen ist außerdem relativ unkritisch.

Die Erfindung wird anhand von Figuren näher erläutert.

Es zeigen:

Figur 1     das Prinzipschaltbild einer Anordnung zur Durchführung des Verfahrens,

Figur 2     ein Diagramm zur Erläuterung der Funktion des ersten Modulators,

Figur 3     ein Diagramm zur Erläuterung der Funktion des zweiten Modulators,

Figur 4     ein Diagramm zur Erläuterung der gesamten Anordnung, Figur 5 eine Weiterbildung der Anordnung und

Figur 6     eine vorteilhafte Anordnung mit zwei in einem Chip integrierten Modulatoren,

Figur 7     ein Mach-Zehnder-Modulator mit periodischen Elektrodenausführungen und

Figur 8     ein weiterer Mach-Zehnder-Modulator mit periodischen Elektrodenausführungen.

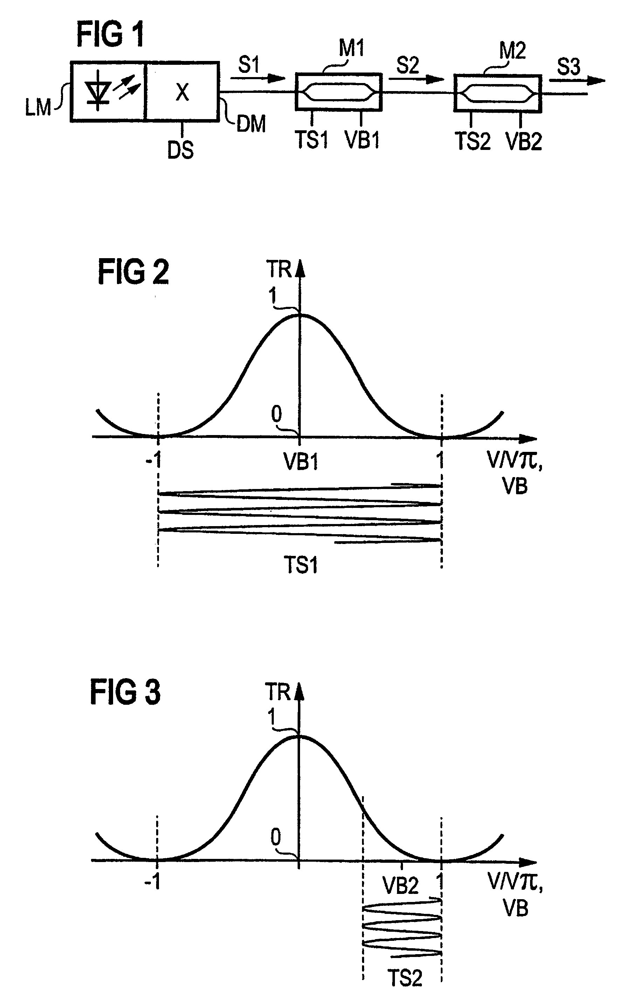

**Figur 1** zeigt die Reihenschaltung eines Lasermoduls LM, das auch einen Datenmodulator DM enthalten kann, dem ein binäres DS zugeführt wird. In Reihe mit dem Lasermodul LM sind zwei Modulatoren M1 und M2 geschaltet. Für die Erfindung unwesentliche Bauelemente wie Verstärker oder Filter sind nicht dargestellt. Das Ausgangssignal des Lasermoduls S1 wird meist ein binär moduliertes (on/off) optisches Signal sein. Wird die Anordnung jedoch nur zur Erzeugung einer optischen Impulsfolge verwendet, so kann auf den Datenmodulator verzichtet werden und dem ersten Modulator als Eingangssignal S1 ein kontinuierliches optisches Signal zugeführt werden. Die weiteren Diagramme gehen davon aus, daß das optische Signal vorhanden ist.

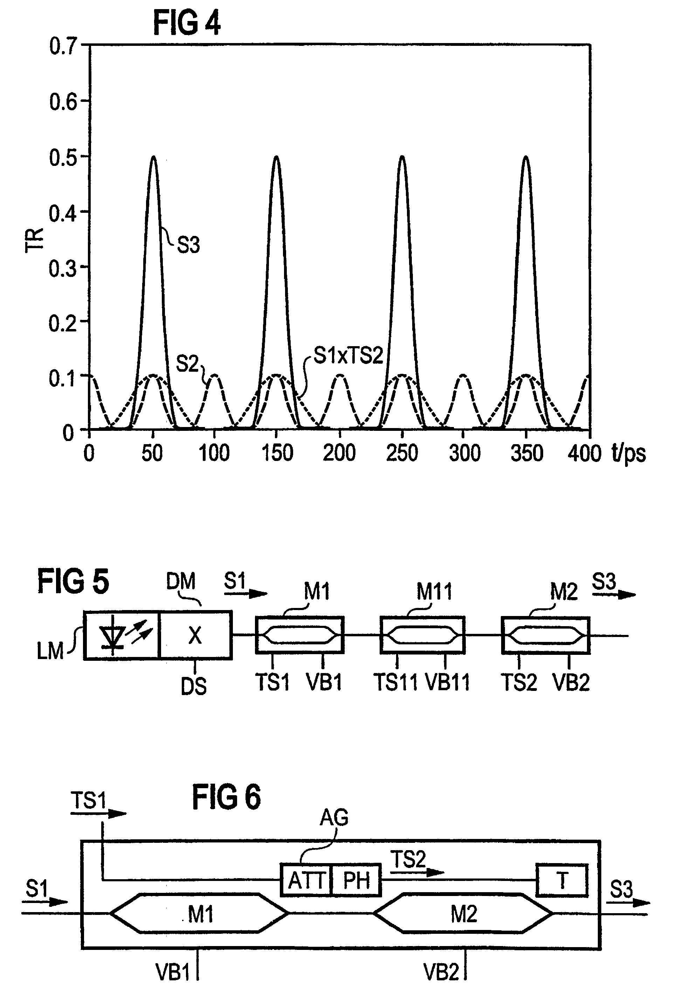

Dem ersten Modulator M1 wird ein erstes Treibersignal TS1 zugeführt, das einen sinusförmigen oder sinusähnlichen Verlauf hat. Prinzipiell sind auch noch andere Kurvenformen denkbar, diese stellen jedoch erhöhte Anforderungen an die Bandbreite der Anordnung. Der Arbeitspunkt des ersten Modulators wird, wie in **Figur 2** dargestellt, durch eine erste Vorspannung (Bias-Spannung) VB1 (in der Figur normiert und auf das Maximum der Transmission bezogen) so festgelegt, daß die Transmission (Übertragungsfunktion) des ersten Modulators zumindest annähernd ein Maximum erreicht. Dies entspricht dem normierten Transmissionswert TR von 1. Die Amplitude des ersten Treibersignals ist so gewählt, daß bei den Spitzenwerten der Treiberspannung jeweils der minimale Transmissionswert, hier 0, erreicht wird. Dies ist bei einer normierten Treiberspannung $V/V\pi$ von $\pm 1$ der Fall (und wiederholt sich periodisch). Das Resultat der ersten Modulation, das Ausgangssignal des Modulators M1, das zweite Signal S2, weist die doppelte Frequenz wie das Treibersignal TS1 auf und ist in im Zeitdiagramm **Figur 4** gestrichelt dargestellt. Der zweite Modulator M2 wird, wie in **Figur 3** dargestellt, mit einem zweiten Treibersignal TR2 derselben Frequenz, jedoch - bei gleichen Modulatoren - mit zumindest annähernd ¼ der Amplitude des ersten Treibersignals angesteuert. Der Arbeitspunkt VB2 liegt hierbei um $1/4$ $V/V\pi$ der normierten Treiberspannung von dem Spannungswert $V/V\pi = 1$ entfernt bei dem die Transmission den Minimalwert 0 aufweist; in Figur 3 bei $V/V\pi = 3/4$.

In Figur 4 wurde zum besseren Verständnis eine weitere Funktion S1xTS2 eingezeichnet, die der zweite Modulator liefern würde, wenn ihm ein konstantes Eingangssignal zugeführt wird. Da er jedoch das zweite Signal S2 als Eingangssignal erhält, ergibt sich als Produkt das resultierende Signal S3. Die in Figur angegebenen Zahlenwerte entsprechend einem Ausführungsbeispiel, bei dem zusätzlich Verstärker eingefügt sind. Die Modulatoren können natürlich in beliebiger Reihenfolge geschaltet sein.

Eine Verkürzung der Impulse des Ausgangssignals S3 läßt sich erzielen, wenn der erste Modulator M1 entsprechend um mindestens einen weitere Modulatoren ergänzt wird, denen entsprechend dem US Patent 4,505,587 durch weitere Modulatoren ergänzt wird, denen Treibersignale mit vielfachen Frequenzen zugeführt werden. In **Figur 5** wurde nur ein weiterer Modulator M11 hinzugefügt.

Um Frequenzänderung - Chirp - durch die Modulatoren zu vermeiden, werden zweckmäßigerweise Zweistrahl-Interferometer verwendet, bei denen die Phasenmodulation in einem Arm gleich dem Negativen der Phasenmodulation im anderen Arm ist. Dies erreicht man beispielsweise durch Mach-Zehnder-Interferometer, in welchen die modulierenden Anteile der elektrischen Felder (aufgrund Elektrodengeometrie) und optische Felder (aufgrund Wellenleitergeometrie) eine gemeinsame, longitudinal verlaufende Symmetrieebene besitzen.

Es ist besonders vorteilhaft, daß zumindest zwei Modulatoren M1 und M2 entsprechend Figur 6 in einem Chip realisiert werden, wobei das elektrische Treibersignal TS1 in Serie durch beide Modulatoren geführt wird (Wanderwellenprinzip). Die Ausbreitungsgeschwindigkeiten des Treibersignals und des optischen Signals werden hierbei in an sich bekannter Weise aneinander angepaßt. Die geringe Dämpfung des Treibersignals im ersten Modulator erlaubt es, mit dem durchgeführten Treibersignal den zweiten Modulator anzusteuern. Zwischen den beiden Modulatoren ist in den Signalweg des Treibersignals ein Anpassungsglied AG eingeschaltet, das für die notwendige Dämpfung und ggf. Phasenverschiebung (D+PH) sorgt. Das elektrische Signal kann mit einem Abschlußglied intern oder extern abgeschlossen werden. Im Baustein kann auch eine Phasenanpassung zwischen Treibersignal und der Lichtwelle vorgesehen sein. Selbstverständlich können noch weitere Bauelemente in dem Chip angeordnet sein.

Jeder Modulator weist für das optische Eingangssignal S1 bzw S2 zwei verschiedene Wege auf, deren Laufzeiten durch elektrische Spannungen beeinflußbar sind. Wenn die Laufzeiten gleich sind (V/V$\pi$ = 0, ...), addieren sich die beiden Teilwellen, sind die Laufzeiten dagegen um 180° ($\pi$) des Eingangssignals unterschiedlich (V/V$\pi$ = ±1, ...), dann ergänzen sie sich zu 0. Die Modulatoren werden häufig so ausgeführt, daß durch die Treiberspannungen die Laufzeit eines Signalweges verkürzt und die des zweiten Signalweges verlängert wird. Die Vorspannungen können auch intern erzeugt werden.

Auf eine Abschwächung im Anpassungsglied AG kann dann verzichtet werden, wenn man den zweiten Modulator - relativ gesehen - unempfindlicher macht als den ersten. Dies erfolgt in vorteilhafter Weise dadurch, daß die Länge des Mach-Zehnder-Interferometers M2 kürzer als die des Mach-Zehnder-Interferometers M1 gewählt wird; im Idealfall dämpfungsfreier Elektroden wäre die elektrooptische Interaktionslänge in M2 viermal so kurz wie in M1.

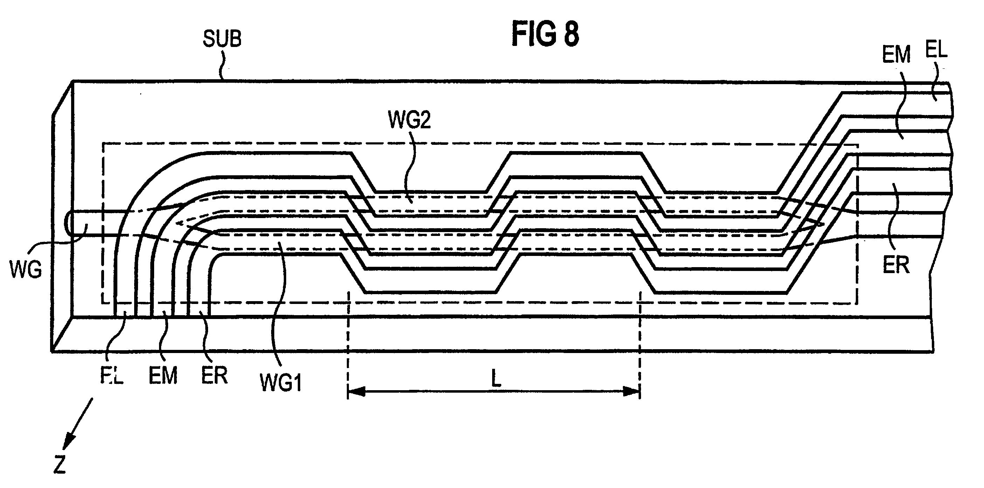

Zur Optimierung der Modulationseffizienz kann es günstig sein, auf Anpassung der Ausbreitungsgeschwindigkeiten von optischer und elektrischer Welle zu verzichten. In solchen Fällen muß man auf andere Weise dafür sorgen, daß optische Welle und elektrische Modulationsphase nicht auseinanderlaufen. Dazu ist eine örtlich periodische Umkehrung des elektrischen Feldes des Ansteuersignals geeignet. In **Figur 8** ist dies am Beispiel des Mach-Zehnder-Interferometers M1 dargestellt.

Dieses ist auf einem Lithiumniobat-Substrat SUB untergebracht. Die optische Achse Z verläuft senkrecht zur Zeichenebene, man nennt dies auch Z-Schnitt. Es besteht aus einem Wellenleiter WG, welcher sich im Bereich des Modulators M1 in zwei Arme WG1, WG2 aufspaltet, und Elektroden EL, EM, ER. An einem elektrischen Eingang EE wird das hochfrequente Steuersignal in die durch die Elektroden EL, EM, ER gebildete Koplanarleitung eingespeist. Dabei sind EL, ER die Masseelektroden und EM trägt das Treibersignal TS1. Die Koplanarleitung läuft anschließend zum Anpassungsglied AG und Modulator M2. Mit einer räumlichen Periode L verläuft die Mittelelektrode in Strecken der Länge L/2 abwechselnd über dem Wellenleiterarm WG2 und dem Wellenleiterarm WG1. Eine Massefläche, also eine der beiden Masseelektroden EL, ER der Koplanarleitung, liegt in diesen Bereichen abwechselnd über dem jeweils anderen Wellenleiterarm. Auf diese Weise verläuft das elektrische Feld der Elektroden mit der Periode L periodisch. Ziel ist es, die optische Welle während des Durchlaufs durch die Wellenleiterarme WG1, WG2 möglichst überall in derselben Richtung zu modulieren. Dazu muß gelten

$$L * |1 / Vel - 1 / Vopt| = 1 / Fel.$$

Hier ist L die räumliche Periode, Vel die elektrische Ausbreitungsgeschwindigkeit im koplanaren Wellenleiter, Vopt die optische Ausbreitungsgeschwindigkeit und Fel die elektrische Modulationsfrequenz. Üblicherweise verlaufen elektrische und optische Welle in derselben Richtung, so daß Vel und Vopt dasselbe Vorzeichen besitzen. Es ist jedoch auch möglich, elektrische und optische Welle in entgegengesetzten Richtungen sich ausbreiten zu lassen. In diesem Fall ist für L ein viel kleinerer Wert zu wählen und es ergibt sich eine geringere elektrische Modulationsbandbreite (um Fel herum). Bei Verwendung zweier kaskadierter Mach-Zehnder-Interferometer M1, M2, welche mit derselben Frequenz betrieben werden, kann die Einspeisung eines elektrischen Signals in der Mitte zwischen beiden Interferometern von Interesse sein. In diesem Fall müßte das erste Interferometer M1, welches die optische Welle durchläuft, mit einer der optischen Welle entgegenlaufenden elektrischen Welle, das zweite Interferometer M2 mit einer gleichlaufenden elektrischen Welle betrieben werden.

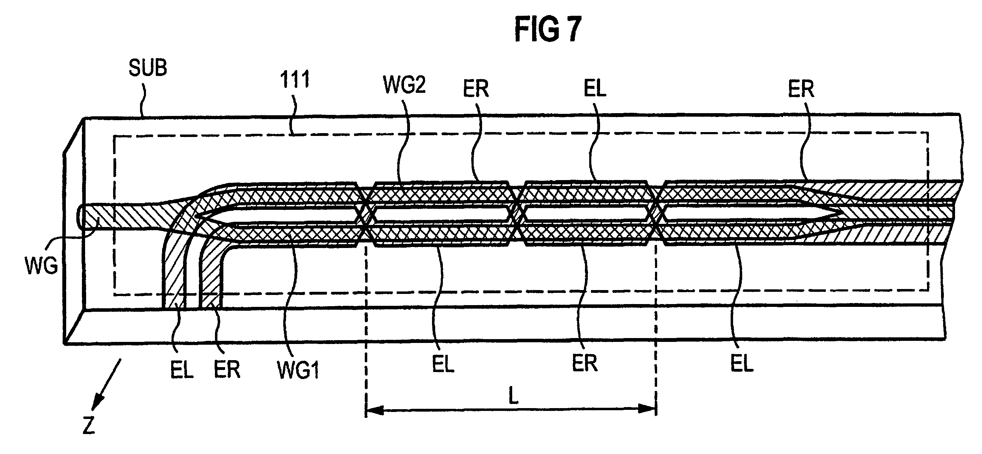

In **Figur 7** schließlich ist ein Mach-Zehnder-Interferometer M1 mit einer symmetrischen, nur aus Elektroden EL, ER bestehenden Leitung abgebildet. Um die periodische Elektrodenstruktur zu erreichen, sind Elektrodenüberkreuzungen mittels isolierender Zwischenschicht oder durch Bonddrähte vorgesehen.

Zur Minimierung des Bedarfs an Steuerleistung kann schließlich das den Modulator einschließende Gehäuse als Hochfrequenzresonator ausgeführt sein.

**Patentansprüche**

1. Verfahren zur Erzeugung von RZ-Signalen mit mehreren in Serie geschalteten Modulatoren (M1, M2), denen ein optisches Signal (S1) zugeführt wird,
   **dadurch gekennzeichnet,**
   **daß** der erste Modulator (M1) zumindest annähernd einen Arbeitspunkt (VB1) für das erste Treibersignal (TS1) aufweist, bei dem die Transmission (TR) ein Maximum (1) aufweist,
   **daß** die Transmission (TR) bei den Spitzenwerten ($V/V\pi$ = -1, +1) des ersten Treibersignals (TS1) jeweils zumindest annähernd ein Minimum (0) aufweist,
   **daß** der zweite Modulator (M2) zumindest annähernd einen Arbeitspunkt (VB2) aufweist, der um 1/4 des Abstandes zwischen den einer maximalen und benachbarten minimalen Transmission (1, 0) zugehörigen Arbeitspunkten ($V/V\pi$ = 0; 1) von einem der minimalen Transmission (0) zugehörigem Arbeitspunkt ($V/V\pi$ = 1) entfernt ist, und
   **daß** dem zweiten Modulator ein zweites Treibersignal (TS2) zugeführt wird, dessen Amplitude so gewählt ist, daß seine Spitzenwerte (1; 0,5) zumindest annähernd zur Ansteuerung zwischen einem Minimalwert (0) der Transmission (TR) und der Hälfte (0,5) des Maximalwertes der Transmission (TR) liegen.

2. Verfahren nach Anspruch 1,
   **dadurch gekennzeichnet,**
   **daß** die Modulation in Mach-Zehnder-Modulatoren erfolgt.

3. Verfahren nach Anspruch 1 oder 2,
   **dadurch gekennzeichnet,**
   **daß** zur Verkürzung der RZ-Impulse mindestens eine weitere Modulation des optischen Signals (S1) mit mindestens einem weiteren Treibersignal (TS11) durchgeführt wird, wobei jedes weitere Treibersignal (TS11) die doppelte Frequenz des vorhergehenden Treibersignals aufweist.

4. Verfahren nach einem der vorhergehenden Ansprüche,
   **dadurch gekennzeichnet,**
   **daß** als optisches Signal (S1) ein binär moduliertes Signal der Reihenschaltung der Modulatoren (M1, M2) zugeführt wird.

5. Anordnung zur Erzeugung von RZ-Signalen mit mehreren in Serie geschalteten Modulatoren (M1, M2), denen ein optisches Signal (S1) zugeführt wird,
   **dadurch gekennzeichnet,**
   **daß** eine Reihenschaltung von mindestens zwei Modulatoren (M1, M2) vorgesehen ist,
   **daß** ein Treiber vorgesehen ist, von dem diesen Modulatoren (M1, M2) als Treibersignale (TS1, TS2) Signale derselben Frequenz aber mit unterschiedlichen wirksamen Amplituden im Verhältnis von 1 : 4 zugeführt sind,
   **daß** mindestens zwei Modulatoren (M1, M2) unterschiedliche Arbeitspunkte (VB1, VB2) aufweisen, wobei bei einem Arbeitspunkt(VB1) die Transmission ein Maximum (1) aufweist und der andere Arbeitspunkt so gewählt ist daß nur bei einem Spitzenwert des zweiten Treibersignals (TR) die Transmission (TR) einen Minimalwert (0) aufweist und

6. Anordnung nach Anspruch 5,
   **dadurch gekennzeichnet,**
   **daß** mindesten zwei Modulatoren (M1, M2) auf einem Chip integriert sind und
   **daß** das elektrische Treibersignal (TS1) durch beide Modulatoren (M1, M2) geführt ist, wobei zwischen den Modulatoren ein Anpassungsglied (AG) zur Amplituden- und/oder Phasenanpassung vorgesehen ist.

7. Anordnung nach Anspruch 5,
   **dadurch gekennzeichnet,**
   **daß** Mach-Zehnder-Modulatoren vorgesehen sind.

8. Anordnung nach einem der Ansprüche 5 bis 7,
   **dadurch gekennzeichnet,**
   **daß** ein Modulator (M1, M2) räumlich periodische Steuerelektroden (EL, EM, ER) besitzt, wobei die Periodenlänge (L) multipliziert mit dem Betrag (| 1 / Vel - 1 / Vopt |) der Differenz (1 / Vel - 1 / Vopt) zwischen dem Inversen (1 / Vel) der Ausbreitungsgeschwindigkeit (Vel) des elektrischen Treibersignals (TS1, TS2) und dem Inversen (1 / Vopt) der Ausbreitungsgeschwindigkeit (Vopt) des optischen Signals (S1) wenigstens näherungsweise das Inverse (1 / Fel) der elektrischen Modulationsfrequenz (Fel) ergibt.

## Claims

1. Method for producing RZ signals using a number of series-connected modulators (M1, M2) to which an optical signal (S1) is supplied, **characterized in that** the first modulator (M1) has at least approximately one operating point (VB1) for the first driver signal (TS1), for which the transmission (TR) has a maximum (1), **in that** the transmission (TR) in each case has at least approximately one minimum (0) at the peak values ($V/V\pi = -1, +1$) of the first driver signal (TS1), **in that** the second modulator (M2) has at least approximately one operating point (VB2) which is separated from an operating point ($V/V\pi = 1$) that is associated with the minimum transmission (0) by 1/4 of the distance between the operating points ($V/V\pi = 0; 1$) which are associated with a maximum and adjacent minimum transmission (1, 0), and **in that** the second modulator is supplied with a second driver signal (TS2), whose amplitude is selected such that its peak values (1; 0.5) lie, at least approximately for driving, between a minimum value (0) of the transmission (TR) and half (0.5) of the maximum value of the transmission (TR).

2. Method according to Claim 1, **characterized in that** the modulation is carried out using Mach-Zehnder modulators.

3. Method according to Claim 1 or 2, **characterized in that**, in order to shorten the RZ pulses, at least one further modulation of the optical signal (S1) is carried out with at least one further driver signal (TS11), with each further driver signal (TS11) being at twice the frequency of the preceding driver signal.

4. Method according to one of the preceding claims, **characterized in that** a binary-modulated signal is supplied as an optical signal (S1) to the series-connected modulators (M1, M2).

5. Arrangement for producing RZ signals having a number of series-connected modulators (M1, M2), to which an optical signal (S1) is supplied, **characterized in that** at least two modulators (M1, M2) are connected in series, **in that** a driver is provided, from which signals at the same frequency but with different effective amplitudes in the ratio of 1:4 are supplied as driver signals (TS1, TS2) to these modulators (M1, M2), **in that** at least two modulators (M1, M2) have different operating points (VB1, VB2), with the transmission having a maximum (1) at one operating point (VB1) and the other operating point being selected such that the transmission (TR) has a minimum value (0) only at a peak value of the second driver signal (TR).

6. Arrangement according to Claim 5, **characterized in that** at least two modulators (M1, M2) are integrated on one chip, and **in that** the electrical driver signal (TS1) is passed through both modulators (M1, M2), with a matching element (AG) for amplitude and/or phase matching being provided between the modulators.

7. Arrangement according to Claim 5, **characterized in that** Mach-Zehnder modulators are provided.

8. Arrangement according to one of Claims 5 to 7, **characterized in that** one modulator (M1, M2) has physically periodic control electrodes (EL, EM, ER), for which the period length (L) multiplied by the magnitude (| 1/Vel - 1/Vopt |) of the difference (1/Vel - 1/Vopt) between the inverse (1/Vel) of the speed of propagation (Vel) of the electrical driver signal (TS1, TS2) and the inverse (1/Vopt) of the speed of propagation (Vopt) of the optical signal (S1) results at least approximately in the inverse (1/Fel) of the electrical modulation frequency (Fel).

## Revendications

1. Procédé pour générer des signaux RZ avec plusieurs modulateurs (M1, M2) montés en série auxquels est amené un signal optique (S1), **caractérisé en ce que** le premier modulateur (M1) présente au moins approximativement un point de fonctionnement (VB1) pour le premier signal excitateur (TS1) auquel la transmission (TR) présente un maximum (1), **en ce que** la transmission (TR) présente au moins approximativement un minimum (0) pour chaque valeur maximale ($V / V\pi = -1, +1$) du premier signal excitateur (TS1), **en ce que** le deuxième modulateur (M2) présente au moins approximativement un point de fonctionnement (VB2) distant d'un point de fonctionnement ($V / V\pi = 1$) relatif à la transmission minimale (0) d'1/4 de la distance entre les points de fonctionnement ($V / V\pi = 0;1$) relatifs à une transmission maximale et à une transmission minimale voisine (1, 0) et **en ce qu'**au deuxième modulateur est amené un deuxième signal excitateur (TS2) dont l'amplitude est sélectionnée de manière telle que ses valeurs maximales (1; 0,5) se trouvent au moins approximativement entre une valeur minimale (0) de la transmission (TR) et la moitié (0,5) de la valeur maximale de transmission (TR) aux fins de l'excitation.

2. Procédé selon la revendication 1, **caractérisé en ce que** la modulation se fait dans des modulateurs Mach-Zehnder.

3. Procédé selon la revendication 1 ou 2, **caractérisé en ce que**, pour raccourcir les impulsions RZ, au moins une modulation supplémentaire du signal optique (S1) est réalisée à l'aide d'au moins un signal excitateur supplémentaire (TS11), chaque signal excitateur supplémentaire (TS11) ayant une fréquence qui est le double de celle du signal excitateur précédent.

4. Procédé selon l'une des revendications précédentes, **caractérisé en ce qu'**un signal modulé binaire est amené en tant que signal optique (S1) aux modulateurs (M1, M2) montés en série.

5. Dispositif pour générer des signaux RZ à l'aide de plusieurs modulateurs (M1, M2) montés en série auxquels est amené un signal optique (S1), **caractérisé en ce qu'**est prévu un montage en série comprenant au moins deux modulateurs (M1, M2), **en ce qu'**est prévu un excitateur qui délivre auxdits modulateurs (M1, M2), en tant que signaux excitateurs (TS1, TS2), des signaux de même fréquence, mais d'amplitudes efficaces différentes selon un rapport de 1 : 4, **en ce que** au moins deux modulateurs (M1, M2) présentent des points de fonctionnement (VB1, VB2) différents, la transmission présentant un maximum (1) en l'un des points de fonctionnement (VB1) et l'autre point de fonctionnement étant sélectionné de manière telle que la transmission (TR) ne présente une valeur minimale (0) que pour une valeur maximale du deuxième signal excitateur (TR).

6. Dispositif selon la revendication 5, **caractérisé en ce qu'**au moins deux modulateurs (M1, M2) sont intégrés sur une puce et **en ce que** le signal excitateur électrique (TS1) passe par les deux modulateurs (M1, M2), un adaptateur (AG) étant prévu entre les modulateurs aux fins d'adapter les amplitudes et/ou les phases.

7. Dispositif selon la revendication 5, **caractérisé en ce que** sont prévus des modulateurs Mach-Zehnder.

8. Dispositif selon l'une des revendications 5 à 7, **caractérisé en ce qu'**un modulateur (M1, M2) a des électrodes excitatrices périodiques dans l'espace (EL, EM, ER), la longueur de période (L) multipliée par la valeur ( 1 / Vel - 1 / Vopt | ) de la différence (1 / Vel - 1 / Vopt) entre l'inverse (1 / Vel) de la vitesse de propagation (Vel) du signal excitateur électrique (TS1, TS2) et l'inverse (1 / Vopt) de la vitesse de propagation (Vopt) du signal optique (S1) donnant au moins approximativement l'inverse (1 / Fel) de la fréquence de modulation électrique (Fel).

**FIG 1**

**FIG 2**

**FIG 3**

## FIG 4

## FIG 5

## FIG 6

FIG 7

# FIG 8

EP 1 180 250 B1